# EUROPÄISCHE PATENTSCHRIFT

(11) **EP 3 390 179 B1**
(45) Veröffentlichungstag und Bekanntmachung des Hinweises auf die Patenterteilung: **12.02.2020**
(21) Anmeldenummer: 16812697.7
(22) Anmeldetag: 06.12.2016
(51) Int. Cl.: B60T 13/567, C23C 2/00, F16J 15/00

(54) **PNEUMATISCHER BREMSKRAFTVERSTÄRKER MIT EINEM METALLBESCHICHTETEN VERSTÄRKERGEHÄUSE**
PNEUMATIC BRAKE BOOSTER COMPRISING A METAL-COATED BOOSTER HOUSING
SERVOFREIN PNEUMATIQUE DOTÉ D'UN CARTER DE SERVOFREIN À REVÊTEMENT MÉTALLIQUE

(30) Priorität: 17.12.2015 DE 102015225832
(43) Veröffentlichungstag der Anmeldung: 24.10.2018
(73) Patentinhaber: Continental Teves AG & Co. OHG, 60488 Frankfurt am Main (DE)
(72) Erfinder: EBERHART, Rene Peter, 61440 Oberursel (DE); FALLER, Jürgen, 63796 Kahl (DE); JAKOBI, Ralf, 65439 Flörsheim (DE); PRYGUNKOV, Ilja, 55120 Mainz (DE); WEISS, Andreas, 65812 Bad Soden (DE)
(86) Internationale Anmeldenummer: PCT/EP2016/079957
(87) Internationale Veröffentlichungsnummer: WO 2017/102464

(56) Entgegenhaltungen:
- US-A- 4 571 942
- US-A- 4 976 998
- US-B1- 7 048 342

## Beschreibung

Die Erfindung betrifft einen pneumatischen Bremskraftverstärker für eine hydraulische Kraftfahrzeugbremsanlage mit Merkmalen nach dem Oberbegriff des Anspruchs 1.

Derartige Bremskraftverstärker sind weit verbreitet und bekannt. Das Verstärkergehäuse von einem derartigen Bremskraftverstärker weise meist wenigstens zwei dünnwandige Gehäuseschalen auf, welche miteinander verbunden oder aneinander gekoppelt sind, wie es beispielsweise aus US 7 048 342 B1 zu entnehmen ist. Zwischen den Gehäuseschalen sowie an weiteren Stellen am Verstärkergehäuse sind Abdichtelemente angeordnet, die im Bremsbetrieb dynamisch beansprucht werden. Die Gehäuseschalen werden meist durch Tiefziehverfahren aus einem kostengünstigen, gut umformbaren, jedoch rostenden dünnwandigen Stahlblech hergestellt und müssen gegen Korrosion geschützt werden.

Weit verbreitet als Korrosionsschutz bekannt ist eine sogenannte KTL - Beschichtung. Hierbei handelt es sich um eine mittels eines katalytischen Tauchverfahrens auf tiefgezogene und gereinigte Gehäuseschalen aufgebrachte Lackschicht. Eine derartige Lackbeschichtung weist eine mit Rz ≅ 6,3; Ra ≅ 1,2 relativ glatte Oberfläche.

Für eine funktionell entscheidende, dauerhaft zuverlässige Abdichtung insbesondere bei dynamisch beanspruchten Abdichtelementen sicherzustellen, muss bei bekannten Bremskraftverstärkern eine Reihe Vorkehrungen getroffen werden. So muss beispielsweise bei einer Rollmembrane eine massive Dichtwulst vorgesehen werden, welche in einer speziellen, eng tolerierten Ausformung - dem Dichtsitz - in den Gehäuseschalen eingeklemmt wird, damit ein Herausrutschen - sogenannten Ausknöpfen - im Betrieb verhindert wird. Zugleich muss die Rollmembrane vor der Montage mit Trennmittel wie Talkum o.Ä. vorbehandelt werden um bei Montage eine unerwünschte Anhaftung und die damit einhergehende Fehlpositionierung zu vermeiden. Im Betrieb jedoch erhöht das Trennmittel die Gefahr des Herausrutschens der Membrane zwischen glatten lackierten Gehäuseschalen. Zugleich muss beim Zusammenbau des Bremskraftverstärkers und insbesondere bei Montage von Abdichtelementen sehr sorgfältig gearbeitet werden, denn durch mechanische Einwirkungen wie Schläge oder Kratzer kann die Lackschicht beschädigt werden, so dass diese im Abdichtungsbereich stellenweise abplatzt oder die Korrosion wird begünstigt, durch welche die Lackschicht von dem Stahlblech ablöst. Hierdurch können Undichtigkeiten entstehen, welche zur Minderung der Verstärkungskraft führen können und daher zu vermeiden sind.

Es stellt sich somit die Aufgabe, einen verbesserten Bremskraftverstärker anzubieten, bei dem insbesondere die Abdichtung dauerhaft verbessert und die Montage von Abdichtelementen vereinfacht sind.

Die Aufgabe wird erfindungsgemäß durch einen Bremskraftverstärker mit der Merkmalskombination nach dem Anspruch 1 gelöst. Unteransprüche zusammen mit Figuren und Beschreibungen geben weitere erfindungsgemäße Ausführungsformen und vorteilhafte Weiterbildungen an.

Im Folgenden werden die Einzelheiten und Vorteile der Erfindung anhand Figurenbeschreibungen näher erläutert. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen.

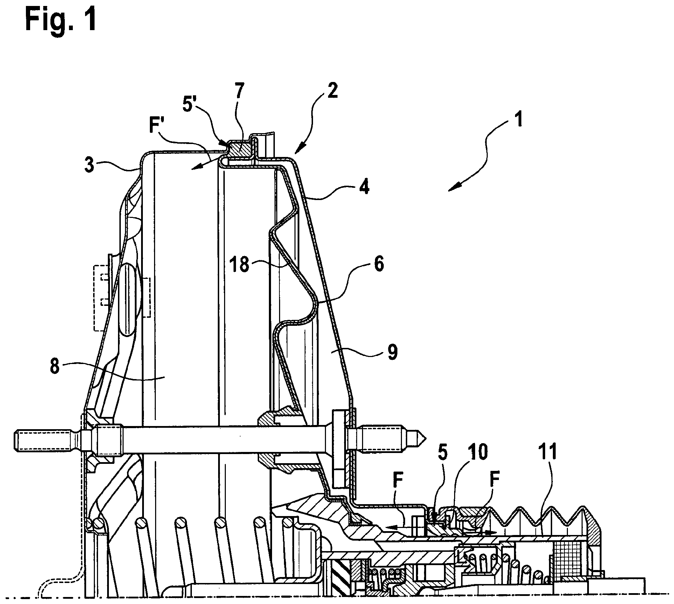

Im Einzelnen zeigt die
Fig.1 beispielhaft eine Axialschnittdarstellung einer Ausführungsform des erfindungsgemäßen Single-Bremskraftverstärkers.
Fig.2 eine vergrößerte Ansicht einer erfindungsrelevanten Abdichtungsstelle der Ausführungsform nach Fig.1.
Fig.3 Vereinfachte prinzipielle Darstellungen eines bekannten (a) und eines erfindungsgemäß (b) ausgeführten Abdichtungsbereichs.
Fig.4 eine vergrößerte Ansicht einer erfindungsrelevanten Abdichtungsstelle bei einem Tandem-Bremskraftverstärker.

### Fig.1

Ein pneumatischer Bremskraftverstärker 1 verfügt über ein dünnwandiges Verstärkergehäuse 2. Das Verstärkergehäuse 2 umfasst aus Stahlblech tiefgezogene Gehäuseschalen 3 und 4, die in ihrem radialen Außenbereich miteinander verbunden sind, meist durch Umbiegen oder Ausstellen von Randbereichen oder Laschen einer der Gehäuseschalen um den Rand oder einen ausgeformten Flansch an der anderen Gehäuseschale.

Die Verstärkungskraft wird im pneumatischen Bremskraftverstärker 1 durch die Druckdifferenz zwischen einer Unterdruckkammer 8 und einer Arbeitskammer 9 erzeugt. Hierfür wird zunächst in der Unterdruckkammer 8 und in der Arbeitskammer 9 ein Unterdruck aufgebaut, welches in der Arbeitskammer 9 zur Erzeugung der Druckdifferenz bedarfsgemäß ganz oder teilweise dem Atmosphärendruck einer den Bremskraftverstärker 1 umgebenden Atmosphäre angeglichen wird. Die Druckdifferenz wirkt auf die Fläche einer Wand 18, die an eine weitere Komponente 11 gekoppelt und mit diesem zusammen linear verschiebbar im Verstärkergehäuse 2 aufgenommen ist. Die Komponente 11 ist in der gezeigten Ausführungsform als ein hülsenförmiges Steuergehäuse ausgebildet, welches an einem am Verstärkergehäuse 2 festgehaltenen elastischen Dichtelement 10 gleitet. Das Dichtelement 10 dient zur Abdichtung der Arbeitskammer 9 gegen die umgebende Atmosphäre. Weil das Gleiten der Komponente 11 nicht reibungslos stattfindet wirkt auf das Dichtelement 10 in die jeweilige Gleitrichtung eine Zugkraft F, welche das Dichtelement aus seinem Sitz im Verstärkergehäuse 2 herauszuschieben versucht. Die Unterdruckkammer 8 ist von der Arbeitskammer 9 durch eine bereichsweise an der Wand 18 anliegende elastomere Rollmembrane 6 pneumatisch abgegrenzt. Die Rollmembrane 6 weist an ihrem radialen Außenrand einen angeformten Wulst 7 auf, welche als Abdichtelement 5' zwischen den Gehäuseschalen 3 und 4 eingeklemmt ist. Im Verstärkerbetrieb wird die Rollmembrane durch die Druckdifferenz in Richtung Unterdruckkammer gezogen, wodurch auf den Wulst 7 eine in das Innere des Verstärkergehäuses 2 gerichtete Zugkraft F' wirkt.

### Fig.2

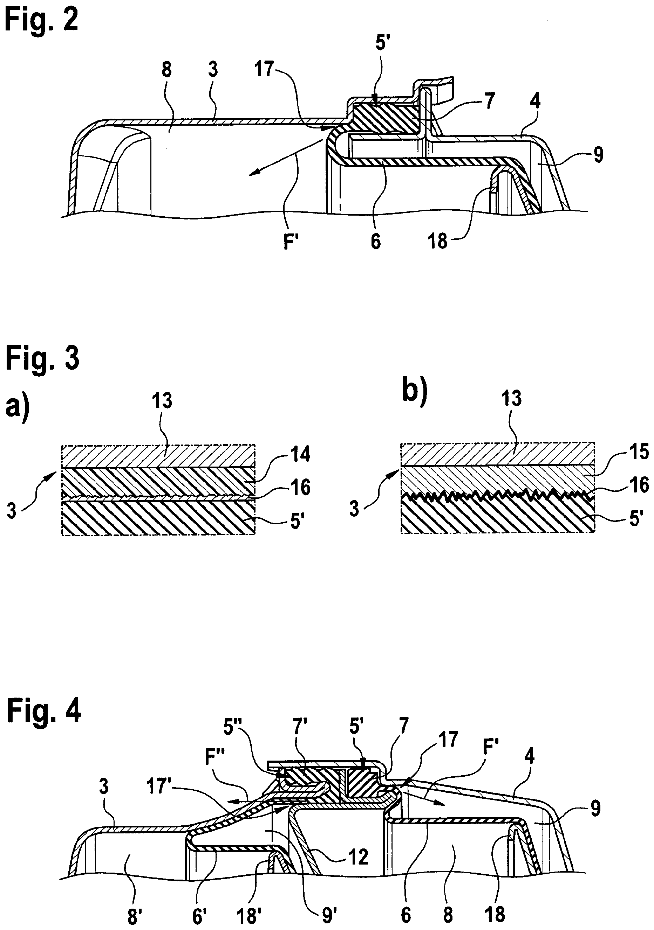

Um ein Herausrutschen des Wulstes 7 bei Belastung durch die Zugkraft F' zu verhindern sind die Gehäuseschalen 3 und 4 derart ausgeformt, das sich zwischen ihnen ein Ringspalt 17 gebildet ist, dessen breite kleiner als die Dicke des Wulstes 7 ist. Eine starke dynamische Belastung der Rollmembrane 6, beispielsweise bei einer Vollbremsung, kann zu einer entsprechend hohen Zugkraft F' führen. Das elastische Abdichtelement 5' wird dabei komprimiert und in den Ringspalt 17 hinein gezogen. Glatte Oberflächen im Anlagebereich des Abdichtelements 5' und ein auf die Rollmembrane aufgebrachtes Trennmittel 16 (siehe Fig.3a) verringern die Haftung und begünstigen das Herausrutschen des Abdichtelements 5'.

### Fig.3

Anhand der Fig.3a wird die Problematik bei bekannten Bremskraftverstärkern 1 verdeutlicht. Eine auf das Stahlblech 13 angebrachte Lackbeschichtung 14 weist eine relativ glatte Oberfläche mit Rauheitswerten von Rz ≅ 6,3; Ra =1,2. Zugleich ist das elastomere Werkstoff des Abdichtelements 5' mit einer Schicht von Trennmittel 16 überzogen. Das Trennmittel verringert im Wesentlichen die Anhaftneigung des elastomeren Werkstoffs an angrenzenden Oberflächen und dient unter Anderem zur Vereinfachung der Montage, weil dadurch beispielsweise der Wulst 7 einfacher in seine vorgesehene Position in der korrespondierenden Ausformung in der Gehäuseschale 3 hinein gleiten kann und die Gefahr einer Fehlpositionierung verringert wird. Dadurch verringert sich jedoch insgesamt die Haftung zwischen der Gehäuseschale 3 und dem Abdichtelement 5'. Als Konsequenz muss der Wulst 7 relativ dick und die Gehäuseschalen 3,4 mit relativ engen Toleranzen ausgebildet werden, um einer hohen Zugkraft F' standzuhalten.
Die erfindungsgemäß ausgeführte Gehäuseschale 3 in der Fig.3b weist statt einer Lackbeschichtung 14 eine Metallbeschichtung 15 auf. Im Unterschied zu der Lackbeschichtung 14 wird die Metallbeschichtung 15 vor der Erstellung von Gehäuseschale 3 auf das Stahlblech 13 angebracht und weist technologisch bedingt eine gegenüber einer Lackbeschichtung 14 erhöhte Oberflächenrauheit auf. Diese rauere Oberfläche der Metallbeschichtung 15 kann für eine bessere Haftung des Abdichtelements 5' an der Gehäuseschale 3 in seinem Anlagebereich genutzt werden. Im zusammengebauten Zustand unter Einwirkung der Flächenpressung wird die Haftung zwischen der Gehäuseschale 3 und dem Abdichtelement 5' durch das Eindringen der Oberflächenspitzen in das Werkstoff des Abdichtelements 5'massiv verbessert. Ein größerer Teil der Zugkraft F' wird dadurch in die Gehäuseschalen 3,4 eingeleitet und ein herausrutschen des Wulstes 7 durch den Ringspalt 17 erschwert.
Zugleich verringert die höhere Oberflächenrauheit bei fehlender Flächenpressung die Anhaftneigung des elastomeren Werkstoffs an angrenzenden Oberflächen zwangsweise, auf natürliche Weise, wodurch der Montageprozess erleichtert und sicherer gestaltet wird, sowie auf das Trennmittel 16 gänzlich verzichtet oder zumindest seine Menge wesentlich reduziert werden kann.
Die Herstellung der Gehäuseschalen 3,4 kann mit gröberen Toleranzen und dadurch mit einfacheren Werkzeugen und Prozessen kostengünstiger erfolgen. Der Wulst 7 kann kleiner ausgeführt werden.
Bevorzugt werden die Gehäuseschalen 3,4 vollständig und nicht nur im Anlagebereich der Abdichtelemente 5,5' mit der Metallbeschichtung 15 versehen. Hierdurch wird die Herstellung der erfindungsgemäß verbesserten Gehäuseschalen 3,4 vereinfacht und, als Nebeneffekt, gleichzeitig der Korrosionsschutz der Gehäuseschalen 3,4 ebenfalls durch die Metallbeschichtung 15 übernommen werden, eine zusätzliche Lackierung ist nicht erforderlich.
Grundsätzlich eignen sich Zink- oder zinkhaltige Metallbeschichtungen aufgrund ihrer Oberflächeneigenschaften und Korrosionsschutzeffekt für den angestrebten Zweck. Als eine besonders bevorzugte Metallbeschichtung eignet sich eine Legierung, die neben Zink zusätzlich Aluminium und Magnesium enthält, vorzugsweise mit Prozentanteilen 3,5% Al und 3% Mg. Eine derartige Legierung weist dauerhaft einen besonders hohen Korrosionsschutz und sehr hohe mechanische Widerstandsfähigkeit.
Eine derartige Metallbeschichtung wird in einem Tauchschmelzverfahren auf das zur Erzeugung von Gehäuseschalen 3,4 vorgesehenes Stahlblech 13 angebracht und weist zwangsweise und ohne Nachbearbeitung eine Oberflächenrauheit mit Rz im Bereich von ca. 9,5 sowie Ra im Bereich von ca. 1,8. Diese Oberflächenrauheit ist höher als bei der üblichen Lackbeschichtung 14, jedoch nicht derart grob, dass eine zuverlässige Abdichtung gefährdet wäre und liegt somit im optimalen Wertebereich im Sinne der Aufgabenstellung.

Durch die Verwendung der vorgeschlagenen Metallbeschichtung ergeben sich überraschend weitere Vorteile.
Der Stahlbleche 13 kann bereits im beschichteten Zustand zur Herstellung von Gehäuseschalen 3,4 tiefgezogen werden. Bei der Wahl einer geeigneten Oberflächenvorbehandlung, insbesondere einer Trockenpassivierung statt Öl wird keinerlei Nachbehandlung der Gehäuseschalen 3,4 wie beispielsweise Entfettung und Waschung für späteren Zusammenbau des Bremskraftverstärkers 1 erforderlich sein. Hierdurch kann der Herstellprozess insgesamt deutlich kostengünstiger gestaltet werden.
Zudem weist die vorgeschlagene Metallbeschichtung 15 einen gegenüber galvanisierten Metallbeschichtungen geringeren Reibkoeffizienten auf, was das Tiefziehen vereinfacht. Schnittkanten, welche durch Stanzen oder Lochen entstehen, werden unmittelbar bei der Herstellung zwangsweise mit einer durch das Werkzeug von der Oberfläche mitgezogenen Metallbeschichtung 15 überzogen und somit gegen Korrosion geschützt. Bei Lackbeschichtungen 14 besteht die Gefahr, dass die Lackschicht bei Herstellung, Montage und im Betrieb stellenweise beschädigt wird und das Stahlblech 13 an diesen Stellen ungeschützt ist und korrodiert. Dies kann beispielsweise durch mechanische Einwirkungen wie Blechverformungen, Laschen umlegen, Kratzer, an Kanten mit Biegebelastung, bei einer ungenügenden Lackierung an Kanten, durch Lackierfehler wie offene Stellen geschehen.

Durch den Einsatz der Metallbeschichtung 15 an gesamten Gehäuseschalen 3,4 werden die Risse und offene Stellen in der selbsttätig durch Bildung von Zinksalzen verschlossen. Dadurch verbessern sich der dauerhafte Korrosionsschutz des erfindungsgemäßen Bremskraftverstärkers 1 und sein neuwertiges optisches Erscheinungsbild bleibt erhalten.

### Fig.4

In der Fig.4 wird ein erfindungsgemäßer Anwendungsfall an einem Bremskraftverstärker 1 der Tandembauart gezeigt.
Ein Tandem-Bremskraftverstärker 1 weist jeweils zwei Unterdruckkammern 8,8', zwei Arbeitskammern 9,9' und zwei Rollmembrane 6,6', wodurch auch zwei Abdichtelemente 5',5" vorliegen, die pneumatische Trennung der jeweiligen Unterdruck- von den Arbeitskammern und zugleich die Abdichtung gegen die Atmosphäre sicherstellen müssen.
Zwischen den Gehäuseschalen 3,4 ist dabei eine Zwischenwand 12 derart angeordnet, dass das Abdichtelement 5" zwischen den Gehäuseschalen 3,4 und der Zwischenwand 12 an diesen abdichtend anliegt, wogegen das Abdichtelement 5' an der Zwischenwand 12 und der Gehäuseschale 4 abdichtend anliegt.
Die Zwischenwand 12 ist erfindungsgemäß im Anlagebereich der Abdichtelemente (5',5") und in einer bevorzugten Ausführungsform vollständig mit der Metallbeschichtung 15 überzogen ausgeführt.

### Bezugszeichenliste

- 1: Bremskraftverstärker
- 2: Verstärkergehäuse
- 3: Gehäuseschale
- 4: Gehäuseschale
- 5: Abdichtelement
- 6: Rollmembrane
- 7: Dichtwulst
- 8: Unterdruckkammer
- 9: Arbeitskammer
- 10: Dichtelement
- 11: Komponente
- 12: Zwischenwand
- 13: Stahlblech
- 14: Lackbeschichtung
- 15: Metallbeschichtung
- 16: Trennmittel
- 17: Ringspalt
- 18: Wand
- F: Zugkraft

## Patentansprüche

1. Pneumatischer Bremskraftverstärker (1), aufweisend ein Verstärkergehäuse (2) mit wenigstens zwei aus Stahlblech hergestellten Gehäuseschalen (3,4), mit wenigstens einem am Verstärkergehäuse (2) zur Abdichtung gegen eine den Bremskraftverstärker (1) umgebende Atmosphäre pneumatisch abdichtend anliegendem elastischen Abdichtelement (5,5') **dadurch gekennzeichnet, dass** das Verstärkergehäuse (2) im Anlagebereich wenigstens eines Abdichtelements (5,5') eine Metallbeschichtung 15 mit Oberflächenrauheit Ra > 1,2 aufweist.

2. Bremskraftverstärker (1) nach Anspruch 1, **dadurch gekennzeichnet, dass** die Metallbeschichtung 15 Zink enthält.

3. Bremskraftverstärker (1) nach Anspruch 2, **dadurch gekennzeichnet, dass** die Metallbeschichtung 15 Aluminium enthält.

4. Bremskraftverstärker (1) nach Anspruch 2, **dadurch gekennzeichnet, dass** die Metallbeschichtung 15 Magnesium enthält.

5. Bremskraftverstärker (1) nach Anspruch 1, **dadurch gekennzeichnet, dass** die Metallbeschichtung 15 mittels eines Tauchschmelzverfahrens angebracht ist.

6. Bremskraftverstärker (1) nach Anspruch 1, **dadurch gekennzeichnet, dass** wenigstens eine Gehäuseschale (3,4) vollständig mit der Metallbeschichtung 15 überzogen ist.

7. Bremskraftverstärker (1) nach Anspruch 6, **dadurch gekennzeichnet, dass** das Abdichtelement (5') zwischen den Gehäuseschalen (3,4) pneumatisch dichtend eingeklemmt angeordnet ist.

8. Bremskraftverstärker (1) nach Anspruch 1, **dadurch gekennzeichnet, dass** das Abdichtelement (5') als eine an einem radialen Außenrand einer elastomeren Rollmembrane (6) angeformter Dichtwulst (7) ausgebildet ist, wobei die Rollmembrane (6) im Verstärkergehäuse (2) wenigstens eine Unterdruckkammer (8) gegen einer Arbeitskammer (9) begrenzt.

9. Bremskraftverstärker (1) nach Anspruch 1, **dadurch gekennzeichnet, dass** das Abdichtelement (5) als ein am Verstärkergehäuse (2) festgehaltenes Dichtelement (10) zur pneumatischen Abdichtung gegenüber einer linear verschiebbaren Komponente (11) ausgebildet ist.

10. Bremskraftverstärker (1) nach Anspruch 1, **dadurch gekennzeichnet, dass** zwischen den Gehäuseschalen (3,4) eine Zwischenwand (12) derart angeordnet ist, dass zwischen der Gehäuseschale (3) und der Zwischenwand (12) sowie zwischen der Zwischenwand (12) und der Gehäuseschale (4) jeweils ein Abdichtelement (5',5") angeordnet ist und die Zwischenwand (12) in Anlagebereichen der Abdichtelemente (5',5")eine Metallbeschichtung 15 mit Oberflächenrauheit Ra > 1,2 aufweist.

## Claims

1. Pneumatic brake booster (1) comprising a booster housing (2) having at least two housing shells (3, 4) which are produced from steel sheet, having at least one elastic sealing element (5, 5') which for sealing in relation to an atmosphere surrounding the brake booster (1) bears in a pneumatically sealing manner on the booster housing (2), **characterized in that** the booster housing (2) in the bearing region of at least one sealing element (5, 5') has a metal coating 15 having a surface roughness Ra > 1.2.

2. Brake booster (1) according to Claim 1, **characterized in that** the metal coating 15 contains zinc.

3. Brake booster (1) according to Claim 2, **characterized in that** the metal coating 15 contains aluminum.

4. Brake booster (1) according to Claim 2, **characterized in that** the metal coating 15 contains magnesium.

5. Brake booster (1) according to Claim 1, **characterized in that** the metal coating 15 is applied by means of an immersion melt method.

6. Brake booster (1) according to Claim 1, **characterized in that** at least one housing shell (3, 4) is covered completely by the metal coating 15.

7. Brake booster (1) according to Claim 6, **characterized in that** the sealing element (5') is disposed so as to be jammed in a pneumatically sealing manner between the housing shells (3, 4).

8. Brake booster (1) according to Claim 1, **characterized in that** the sealing element (5') is configured as a sealing bead (7) that is moulded to a radial external periphery of an elastomeric rolling diaphragm (6), wherein the rolling diaphragm (6) in the booster housing (2) delimits at least one vacuum chamber (8) in relation to an operating chamber (9).

9. Brake booster (1) according to Claim 1, **characterized in that** the sealing element (5) is configured as a sealing element (10) that is fixedly held on the booster housing (2), said sealing element (5) being configured for pneumatically sealing in relation to a component (11) that is displaceable in a linear manner.

10. Brake booster (1) according to Claim 1, **characterized in that** an intermediate wall (12) is disposed between the housing shells (3, 4) in such a manner that in each case one sealing element (5', 5") is disposed between the housing shell (3) and the intermediate wall (12), and between the intermediate wall (12) and the housing shell (4), and the intermediate wall (12) in bearing regions of the sealing elements (5', 5") has a metal coating 15 having the surface roughness Ra > 1.2.

## Revendications

1. Servofrein pneumatique (1), comportant un carter de servofrein (2) comprenant au moins deux coques de carter (3, 4) fabriquées à partir de tôle d'acier, comprenant au moins un élément d'étanchéité (5, 5') élastique s'appuyant de manière étanche de façon pneumatique contre le carter de servofrein (2) pour réaliser l'étanchéité par rapport à une atmosphère entourant le servofrein (1), **caractérisé en ce que** le carter de servofrein (2) comprend, dans la région d'appui d'au moins un élément d'étanchéité (5, 5'), un revêtement métallique (15) présentant une rugosité de surface Ra > 1,2.

2. Servofrein (1) selon la revendication 1, **caractérisé en ce que** le revêtement métallique (15) comprend du zinc.

3. Servofrein (1) selon la revendication 2, **caractérisé en ce que** le revêtement métallique (15) comprend de l'aluminium.

4. Servofrein (1) selon la revendication 2, **caractérisé en ce que** le revêtement métallique (15) comprend du magnésium.

5. Servofrein (1) selon la revendication 1, **caractérisé en ce que** le revêtement métallique (15) est appliqué à l'aide d'un procédé d'immersion en bain fondu.

6. Servofrein (1) selon la revendication 1, **caractérisé en ce qu'**au moins une coque de carter (3, 4) est revêtue complètement du revêtement métallique (15).

7. Servofrein (1) selon la revendication 6, **caractérisé en ce que** l'élément d'étanchéité (5') est disposé de manière serrée et étanche de façon pneumatique entre les coques de carter (3, 4).

8. Servofrein (1) selon la revendication 1, **caractérisé en ce que** l'élément d'étanchéité (5') est réalisé sous forme de bourrelet d'étanchéité (7) moulé sur un bord extérieur radial d'une membrane déroulante élastomère (6), la membrane déroulante (6) délimitant, dans le carter de servofrein (2), au moins une chambre à dépression (8) vis-à-vis d'une chambre de travail (9).

9. Servofrein (1) selon la revendication 1, **caractérisé en ce que** l'élément d'étanchéité (5) est réalisé sous la forme d'un élément d'étanchéité (10) fixé sur le carter de servofrein (2) pour réaliser l'étanchéité pneumatique vis-à-vis d'un composant (11) déplaçable linéairement.

10. Servofrein (1) selon la revendication 1, **caractérisé en ce qu'**une paroi intermédiaire (12) est disposée entre les coques de carter (3, 4) de telle sorte qu'un élément d'étanchéité (5', 5") soit respectivement disposé entre la coque de carter (3) et la paroi intermédiaire (12) ainsi qu'entre la paroi intermédiaire (12) et la coque de carter (4), et la paroi intermédiaire (12) comprend, dans des régions d'appui des éléments d'étanchéité (5', 5'), un revêtement métallique (15) présentant une rugosité de surface Ra > 1,2.
